# EUROPÄISCHE PATENTSCHRIFT

(11) **EP 1 285 184 B1**
(45) Veröffentlichungstag und Bekanntmachung des Hinweises auf die Patenterteilung: **14.01.2004**
(21) Anmeldenummer: 01947295.0
(22) Anmeldetag: 19.05.2001
(51) Int. Cl.: F16H 57/04, B23P 9/04

(54) **AUTOMATGETRIEBE**
AUTOMATIC TRANSMISSION
BOITE DE VITESSES AUTOMATIQUE

(30) Priorität: 24.05.2000 DE 10025682
(43) Veröffentlichungstag der Anmeldung: 26.02.2003
(73) Patentinhaber: ZF FRIEDRICHSHAFEN Aktiengesellschaft, 88038 Friedrichshafen (DE)
(72) Erfinder: NEUFISCHER, Thomas, 88046 Friedrichshafen (DE)
(86) Internationale Anmeldenummer: PCT/EP2001/005759
(87) Internationale Veröffentlichungsnummer: WO 2001/090605

(56) Entgegenhaltungen:
- DE-A- 4 113 165
- US-A- 5 607 371
- US-A- 5 928 100
- PATENT ABSTRACTS OF JAPAN vol. 017, no. 651 (M-1519), 3. Dezember 1993 (1993-12-03) -& JP 05 212629 A (MITSUBISHI HEAVY IND LTD), 24. August 1993 (1993-08-24)

## Beschreibung

Die vorliegende Erfindung betrifft ein Automatgetriebe für Kraftfahrzeuge, mit einem Gehäuse, in dem eine Vielzahl von Kupplungen und Bohrungen angeordnet sind, mit einer Eingangswelle und mit einer Ausgangswelle, sowie mit einer drehmomentführenden Welle, die eine axiale Zentralbohrung und mehrere radiale Querbohrungen aufweist zur Druckversorgung einzelner Bauteile mit einem Hydraulikfluid, nach dem Oberbegriff des Anspruchs 1.

Drehmomentführende Wellen mit Querbohrungen werden sowohl in stufenlosen Automatgetrieben als auch in Stufenautomatgetrieben zur Druckversorgung einzelner Bauteile im Getriebe mit einem Hydraulikfluid eingesetzt, wobei üblicherweise die Querbohrungen als zylindrische Bohrungen mit einem Übergangsradius an der Mündung ausgeführt sind.

Ein Beispiel eines derartigen Stufenautomatgetriebes ist in der DE 199 08 840 der Anmelderin beschrieben. Das Stufenautomatgetriebe weist hierbei eine Vielzahl von Kupplungen und Bremsen auf, wobei zumindest ein Teil der Kupplungen als naßlaufende Lamellenkupplungen ausgebildet sind, mit einem inneren und einem äußeren Lamellenträger, wobei der innere Lamellenträger sich dreht und der äußere Lamellenträger feststeht. Diejenige Kupplung, bei der im Betriebszustand der Standabkopplung der innere Lamellenträger feststeht und der äußere Lamellenträger sich dreht, ist bei diesem Stufenautomatgetriebe mit einem Schleudertopf versehen, der innerhalb des inneren Lamellenträgers koaxial zur Hohlwelle angeordnet ist und der mit einem sich ständig drehenden Bauteil der Kupplung fest verbunden ist, wobei die Außenwand des Schleudertopfes mit Bohrungen versehen ist.

Die drehmomentführende Hohlwelle führt der Kupplung dabei Kühlöl zu, welches durch die radialen Querbohrungen in der drehmomentführenden Welle austritt.

Ein Beispiel eines stufenlosen Automatgetriebes mit Lamellenkupplung ist in der DE 197 34 839 A der Anmelderin beschrieben. Das Automatgetriebe mit einem auf einem mit einer Primärwelle fest verbundenen Scheibensatz geführten Schubgliederband weist in der Lamellenkupplung ein Lamellenpaket mit Innenlamellen und Außenlamellen auf, wobei die Innenlamellen in einen Innenlamellenträger und die Außenlamellen in einen Außenlamellenträger geführt sind und wobei die Lamellenpakete von einem Kolben zusammenpreßbar sind. Der Außenlamellenträger ist korbartig ausgebildet und auf der dem Scheibensatz abgewandten Seite des Kolbens auf Abstand zu dem Scheibensatz angeordnet, wobei der Außenlamellenträger auf seiner dem Kolben zugewandten Seite offen ausgebildet ist und über eine Verzahnung kraftschlüssig mit einer Antriebswelle verbunden ist. Auch hierbei ist die als drehmomentführende Welle ausgebildete Primärwelle mit Querbohrungen für die Ölführung zur Schmierung und Kühlung des Lamellenpaktes versehen, die üblicherweise als zylindrische Querbohrungen mit einem Übergangsradius an der Mündung ausgeführt sind.

Es hat sich herausgestellt, dass derartige drehmomentführende Wellen in Automatgetrieben, insbesondere für Kraftfahrzeuge, mit Querbohrungen aufgrund der Kerbwirkung unter bestimmten Bedingungen bruchgefährdet sind. Der Bruchbeginn tritt dabei jeweils im Mündungsbereich der Querbohrungen auf.

Eine Festigkeitssteigerung dieser drehmomentführenden Wellen mit Querbohrungen durch einen besseren Werkstoff oder durch Optimierungen des Härteprozesses scheitert aus wirtschaftlichen Gesichtspunkten an den höheren Kosten.

Es wurde auch bereits versucht, die Lage, die Anzahl und den Durchmesser der Querbohrungen zu variieren, sowie die Kerbwirkung durch eine Verbesserung der Oberflächengüte zu vermindern. Die Funktion des für den optimalen Betrieb des Automatgetriebes erforderlichen Öldurchsatzes wird hierbei oft in unzulässiger Weise eingeschränkt.

In der DE 41 13 165 A1 ist ein Verfahren zum Bearbeiten von Bohrungen in hochbelasteten Bauteilen beschrieben, bei dem ein in Achsrichtung der Bohrung bewegter Prägekörper eine mit einem definierten Übermaß gefertigte, verschleißfeste Kugel auf den Bohrungsrand drückt. Dadurch soll die Festigkeit am Bohrungseintritt und -austritt verbessert werden, so daß sich in diesem Bereich Anrisse durch Kerbwirkung vermeiden oder zumindest verzögern lassen.

Nachteilig wirkt sich bei diesem Verfahren jedoch die Tatsache aus, daß sich durch die plastische Verformung dennoch Mikrorisse bilden, die sich bei hohen Schwingungsbelastungen, wie sie in Automatgetrieben auftreten können, vergrößern und zu einem vorzeitigen Ausfall der Bauteile führen können.

Aufgabe der vorliegenden Erfindung ist es, die Festigkeit von drehmomentführenden Wellen mit Querbohrungen in Automatgetrieben wesentlich zu erhöhen, ohne dass dabei Mehrkosten entstehen.

Ausgehend von einem Automatgetriebe der eingangs näher genannten Art erfolgt die Lösung dieser Aufgabe mit dem im kennzeichnenden Teil des Hauptanspruchs angegebenem Merkmal; eine vorteilhafte Ausgestaltung ist im Unteranspruch beschrieben.

Ausgehend von einem Automatgetriebe für Kraftfahrzeuge mit mindestens einer drehmomentführenden Welle, die eine axiale Zentralbohrung und mehrere radiale Querbohrungen aufweist zur Druckversorgung einzelner Bauteile mit einem Hydraulikfluid, wobei die Querbohrungen als zylindrische Bohrungen mit einem Übergangsradius an der Mündung ausgeführt sind, wird also erfindungsgemäß vorgeschlagen, dass der Mündungsbereich eine konische Ausgestaltung aufweist. Vorzugsweise schließt sich der konische Mündungsbereich ohne Absatz an die zylindrische Querbohrung an.

In überraschender Weise wurde gefunden, dass die Festigkeit der drehmomentführenden Welle wesentlich erhöht wird, wenn der Mündungsbereich der zylindrischen Querbohrungen konisch gestaltet wird, da sich hierbei die auftretenden Spannungen über eine größere Fläche verteilen, sodass eine spezifische Spannungsreduzierung erzielt wird. Zudem wird durch die trichterförmige Mündung der zylindrischen Querbohrung das Strömungsverhalten des sie durchsetzenden Hydraulikfluids in messbarer Weise verbessert.

Eine weitere Optimierungsmaßnahme stellt die Verwendung eines Spezialwerkzeuges dar, welches den kompletten Mündungsbereich der zylindrischen Querbohrungen ohne Absatz formt; bei einer nicht durch einen Absatz unterbrochenen trichterförmigen bzw. konischen Bohrungsfläche wird die Kerbwirkung soweit minimiert, dass Härterisse zuverlässig vermieden werden können.

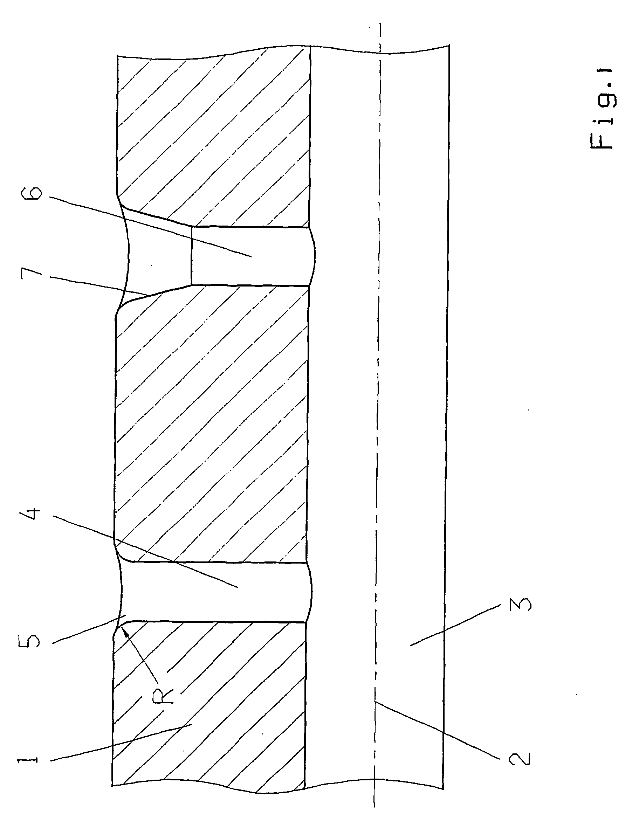

Im folgenden wird die Erfindung anhand der Zeichnung näher erläutert, wobei in der einzigen Figur ein Teilquerschnitt durch eine drehmomentführende Welle mit zwei zylindrischen Querbohrungen dargestellt ist.

Mit 1 ist hierbei die drehmomentführende Welle bezeichnet, deren Längsachse mit 2 bezeichnet ist und die mit einer Zentralbohrung 3 versehen ist, durch welche ein Druckfluid über Querbohrungen 4, 6 den mit dem Hydraulikfluid zu versorgenden Bauteilen des Getriebes zugeführt wird.

Die in der Figur links eingezeichnete mit 4 bezeichnete zylindrische Querbohrung ist in herkömmlicher Weise mit einem Mündungsbereich 5 versehen, an dem aufgrund der Kerbwirkung bei bestimmten Betriebsbedingungen Risse auftreten können, deren Beginn jeweils in Mündungsbereich liegt, wie es durch R im Zusammenhang mit der zylindrischen Querbohrung 4 angedeutet ist.

Erfindungsgemäß wird nun vorgeschlagen, die zylindrische Querbohrung 6 mit einer konischen Ausgestaltung 7 im Mündungsbereich zu versehen, da sich hierbei die auftretenden Spannungen über eine größere Fläche verteilen, was zu einer Spannungsreduzierung pro Flächeneinheit führt. Die Festigkeit der drehmomentführenden Welle 1 wird dadurch wesentlich erhöht, wobei zugleich durch diese konische bzw. trichterförmige Mündung 7 das Strömungsverhalten des Hydraulikfluids meßbar verbessert wird.

Besonders vorteilhaft ist es wenn, unter Verwendung eines Spezialwerkzeuges der komplette Mündungsbereich 7 für die zylindrische Querbohrung 6 ohne Absatz geformt wird. Bei einer nicht unterbrochenen Trichter- bzw. Bohrungsfläche 7 wird die Kerbwirkung soweit minimiert, dass Härterisse zuverlässig vermieden werden.

### Bezugszeichen

- 1: Welle
- 2: Achse
- 3: Zentralbohrung
- 4: Querbohrung
- 5: Mündungsbereich
- 6: Querbohrung
- 7: Mündungsbereich

## Patentansprüche

1. Automatgetriebe für Kraftfahrzeuge, mit einem Gehäuse, in dem eine Vielzahl von Kupplungen und Bremsen angeordnet sind, mit einer Eingangswelle und einer Ausgangswelle, sowie mit mindestens einer drehmomentführenden Welle (1), die eine axiale Zentralbohrung (3) aufweist zur Druckversorgung einzelner Bauteile mit einem Hydraulikfluid, sowie mehrere radiale Querbohrungen (6), die als zylindrische Bohrungen mit einem Übergangsradius an der Mündung ausgeführt sind, **dadurch gekennzeichnet, dass** der Mündungsbereich eine konische Ausgestaltung (7) aufweist.

2. Automatgetriebe nach Anspruch 1, **dadurch gekennzeichnet, dass** der konische Mündungsbereich (7) sich ohne Absatz an die zylindrische Querbohrung (6) anschließt.

## Claims

1. Automatic transmission for motor vehicles, with a housing in which a multitude of clutches and brakes are arranged, with an input shaft and an output shaft, and with at least one torque-transmitting shaft (1), which features an axial central bore (3) for the supply of individual components with a hydraulic fluid as well as several radial cross bores (6), which are designed as cylindrical bores with a transition radius at the opening, **characterized in that** the area of the opening is of a conical design (7).

2. Automatic transmission according to claim 1, **characterized in that** the conical opening (7) borders directly on the cylindrical cross bore (6) without any shoulder.

## Revendications

1. Boîte de vitesses automatique pour véhicules automobiles, dotée d'un carter, dans lequel est disposée une multitude d'embrayages et de freins, dotée d'un arbre d'entrée et d'un arbre de sortie et d'au moins un arbre de transmission du couple (1) comportant un alésage central axial (3) pour l'alimentation de différents composants par un liquide hydraulique mis sous pression, ainsi que de plusieurs alésages transversaux radiaux (6) qui sont réalisés sous forme d'alésages cylindriques avec un rayon de transition au niveau de l'embouchure, **caractérisée en ce que** la zone autour de l'ouverture des alésages est réalisée sous forme conique (7).

2. Boîte de vitesses automatique selon la revendication 1, **caractérisée en ce que** la zone d'embouchure conique (7) est connectée sans épaulement à l'alésage transversal cylindrique (6).
